# EUROPÄISCHE PATENTSCHRIFT

(11) **EP 3 322 554 B1**
(45) Veröffentlichungstag und Bekanntmachung des Hinweises auf die Patenterteilung: **07.06.2023**
(21) Anmeldenummer: 16735857.1
(22) Anmeldetag: 05.07.2016
(51) Int. Cl.: B23K 26/342, B23K 26/08, B23K 26/12, B23K 15/00, B23K 15/06, B33Y 10/00, B22F 10/25, B22F 12/13

(54) **VERFAHREN ZUR ADDITIVEN HERSTELLUNG VON METALLISCHEN BAUTEILEN**
METHOD FOR THE ADDITIVE MANUFACTURE OF METALLIC COMPONENTS
PROCÉDÉ POUR LA FABRICATION ADDITIVE DE PIÈCES MÉTALLIQUES

(30) Priorität: 15.07.2015 DE 102015008919
(43) Veröffentlichungstag der Anmeldung: 23.05.2018
(73) Patentinhaber: evobeam GmbH, 55126 Mainz (DE)
(72) Erfinder: WAHL, Matthias, 64287 Darmstadt (DE); WEIL, Alexander, 55126 Mainz (DE)
(74) Vertreter: Boult Wade Tennant LLP
(86) Internationale Anmeldenummer: PCT/EP2016/065757
(87) Internationale Veröffentlichungsnummer: WO 2017/009094

(56) Entgegenhaltungen:
- US-A1- 2002 117 485
- US-A1- 2005 173 380
- US-A1- 2010 270 274
- US-A1- 2011 297 658
- US-B1- 6 751 516

## Beschreibung

Die vorliegende Erfindung befasst sich mit einem Verfahren zur additiven Herstellung von dreidimensionalen, metallischen Bauteilen, wobei die Bauteile schicht- oder abschnittsweise unter Vakuumbedingungen durch Verschmelzen eines metallischen Werkstoffes mit dem Bauteil an einer Bearbeitungsstelle mittels einer Strahlenquelle mit hoher Energiedichte aufgebaut werden, wobei der metallische Werkstoff als Draht zugeführt wird, wobei der Draht unter Vakuumbedingungen vor dem Erreichen der Bearbeitungsstelle vorgeheizt wird.

Derartige Verfahren sind beispielsweise aus der EP 1 296 788 B1 oder der DE 10 2013 108 111 A1 bekannt. Ausgehend von einem Substrat als Ausgang für den herzustellenden Körper, das auch bei der vorliegenden Erfindung eingesetzt werden kann, sieht die übliche Vorgehensweise vor, dass bei den Verfahren nach dem Stand der Technik zunächst eine Pulverschicht auf die bereits erzeugten Abschnitte des Werkstückes aufgebracht wird, wobei die Pulverschicht anschließend mit Hilfe einer geeigneten Strahlungsquelle, wie z. B. eines Lasers oder einer Elektronenstrahlkanone mit dem Untergrund an den Stellen verschmolzen wird, an welchen ein Materialauftrag gewünscht ist. Dieser Vorgang wird solange wiederholt, bis das gewünschte Bauteil hergestellt ist, wobei auch komplexe dreidimensionale Strukturen durch den schichtweisen Aufbau möglich sind, die mit herkömmlichen Herstellungsverfahren nicht oder nur mit sehr hohem Aufwand hergestellt werden können.

Die US2005/0173380 A1 beschreibt ein Verfahren zur additiven Herstellung von Bauteilen aus Draht. Ein weiteres additives Herstellungsverfahren ist aus der US 6,751,516 B1 bekannt.

Es hat sich aber gezeigt, dass durch den nach jeder Schicht erforderlichen Auftrag einer weiteren Pulverschicht, die zudem auch noch glattgestrichen werden muss, zum Einen ein recht hoher Zeitaufwand erforderlich ist und zum anderen relativ große Mengen an metallischem Werkstoff in Form von Pulver anfallen, die gar nicht mit dem Bauteil verschmolzen werden. Es versteht sich, dass das Restpulver bei den bekannten Verfahren dann in besonders großen Mengen anfällt, wenn das herzustellende Bauteil in Bezug auf die Grundfläche relativ viele Hohlräume und Aussparungen aufweist.

Ein weiteres Problem kann darin bestehen, dass zum Auftragen der jeweiligen Schicht eine relativ hohe Menge an Energie durch den Laser- oder Elektronenstrahl zugeführt werden muss, die gelegentlich zu einem unerwünscht tiefen Aufschmelzen der bereits erzeugten Werkstoffschichten führt, was die Qualität des herzustellenden Bauteils beeinträchtigen kann.

Aus dem Bereich der Schweißtechnologie ist es bereits bekannt Draht zuzuführen. Es hat sich aber gezeigt, dass das zuvor erörterte Problem des hohen Wärmeeintrages gerade bei der Zufuhr von Draht auftritt. Ein solches, nicht-additives Verfahren ist aus der US 2002/0117485 A1 und der US 2011/0297658 A1 bekannt.

Ein Verfahren der eingangsgenannten Art ist aus der US 2010/270274 A bekannt, die als Basis für den Oberbegriff des Anspruchs 1 dient. Dort wird ein Elektronenstrahl für den Energieeintrag genutzt, der auch selbst für das Vorheizen des Drahtes genutzt wird.

Die Aufgabe der vorliegenden Erfindung besteht darin, ein Verfahren der eingangs genannten Art zu schaffen, das mit einem relativ geringen Energieeintrag durch die Strahlung an der Bearbeitungsstelle durchführbar ist.

Erfindungsgemäß wird die Aufgabe durch ein Verfahren der eingangs beschriebenen Art gelöst, bei welchem die Schmelzenergie durch einen Laserstrahl aufgebracht wird, wobei der Draht unmittelbar elektrisch mittels Widerstandsheizung oder induktiv vorgeheizt wird.

Der Eintrag der Wärmeenergie in den Draht innerhalb der Vakuumbedingungen erfolgt dadurch, dass der Draht induktiv oder elektrisch vorgeheizt wird. Bei einer induktiven Vorheizung wird mittels einer Spule, die den zugeführten Draht umgibt, ein Magnetwechselfeld aufgebaut, welches in dem Draht Wirbelströme erzeugt, die zu einer Aufheizung des Drahtes führen. Die alternativ mögliche direkte elektrische Vorheizung (Widerstandsheizung) wird vorzugsweise dadurch technisch umgesetzt, dass der Strom zum Beheizen des Drahtes über den Draht einerseits und das Werkstück andererseits, aus welchem das Bauteil aufgebaut wird, geleitet wird. Dies ist durch den Kontakt des Drahtes mit dem Schmelzbad ermöglicht.

Vorzugsweise wird der Draht mit Gleichstrom erhitzt, wobei eine negative Polarität an den Draht und eine positive Polarität an das Werkstück angelegt wird.

Es hat sich gezeigt, dass sich das Verfahren insgesamt präziser und mit einem insbesondere unterhalb der Bearbeitungsstelle niedrigeren Wärmeeintrag in das Werkstückmaterial durchführen lässt. Dadurch, dass mittels der Vorheizung des Drahtes bereits ein beträchtlicher Anteil an Energie in Form von Wärme dem Draht bis zum Erreichen des Schmelzpunktes zugeführt ist, kann die Strahlungsenergie des Laserstrahls kleiner bemessen werden, so dass ein an der Bearbeitungsstelle erzeugtes Schmelzbad weniger tief in die bereits aufgetragenen Schichten des Bauteils hineinreicht. Auch die Strahlenquelle kann ggf. kleiner dimensioniert werden.

Die Drahtzuführung erlaubt es ferner, den metallischen Werkstoff auch nur in der benötigten Menge exakt zuzuführen, so dass innerhalb der Vakuumbedingungen, die in der Regel innerhalb einer geschlossenen Vakuumkammer erzeugt werden, weniger Restmaterial anfällt, das entsorgt werden muss.

Ein weiterer Vorteil des erfindungsgemäßen Verfahrens besteht darin, dass es zumindest bereichsweise kontinuierlich durchgeführt werden kann, indem beispielsweise die Oberfläche des Werkstückes zeilenweise mit der Bearbeitungsstelle abgefahren wird.

Vorzugsweise bewegt sich die Bearbeitungsstelle relativ zu dem Werkstück, indem das Werkstück relativ zu der Bearbeitungsstelle, die stationär angeordnet ist, bewegt wird.

In einer weiteren bevorzugten Ausführungsform der Erfindung wird der Draht durch eine Vakuumdurchführung in die bereits angesprochene Vakuumkammer zugeführt, in welcher das Bauteil durch den Aufbau des Werkstückes schrittweise hergestellt wird.

Um das Volumen in der Vakuumkammer nicht unnötig groß werden zu lassen, ist es vorteilhaft, die Drahtbevorratung außerhalb der Vakuumkammer anzuordnen.

Vorzugsweise wird der Draht vorgewärmt in die Kammer zugeführt. Diese Maßnahme kann dann wünschenswert sein, wenn die Heizleistung der in der Kammer angeordneten induktiven oder unmittelbaren elektrischen Heizvorrichtung möglichst klein gehalten werden soll. Die Temperatur des Drahtes kann aber in der Regel vor der Zufuhr in die Vakuumkammer nicht beliebig groß gewählt werden, so dass diese Maßnahme nur ergänzend eingesetzt werden kann.

Der Laserstrahl wird vorzugsweise durch ein Fenster in die Vakuumkammer eingeleitet, so dass die wesentlichen Bauteile des Lasers außerhalb der Vakuumkammer angeordnet werden können. Vorzugsweise ist das Fenster mit einer Gasspülung versehen, um zu verhindern, dass Metalldämpfe an der in der Regel relativ kühlen Fensterinnenfläche kondensieren und das Fenster mit der Zeit zusetzen können. Die Gasspülung erfolgt in der Regel mit einem Inertgas und ist so eingestellt, dass die Vakuumbedingungen nicht gestört werden.

Der Draht wird mittels der Vorheizung möglichst stark erwärmt, ohne dass durch eine zu starke Erwärmung die Qualität des Materialauftrages auf dem Werkstück zur Erzeugung des Bauteiles beeinträchtigt wird. Dies bedeutet, dass die Temperatur des Drahtes bis in die Nähe der Solidustemperatur des metallischen Werkstoffes oder sogar darüber hinaus erhöht werden kann, ohne dass die Kontrolle des Materialauftrags verloren geht. Vielmehr lässt sich dadurch die Energie des Laserstrahls soweit vermindern, dass ein besonders präzisier Auftrag auf dem Werkstück ermöglicht ist.

Die Vorschubgeschwindigkeit des Drahtes hängt selbstverständlich von der gewünschten Menge an Material an der jeweils bearbeiteten Stelle ab und kann beispielsweise auch vollständig unterbrochen werden, wenn an bestimmten Stellen des Werkstückes gar kein Materialaufrag erfolgen soll.

Nachfolgend wird anhand der beigefügten Zeichnungen näher auf zwei Ausführungsbeispiele der Erfindung eingegangen. Es zeigen:
Fig. 1 einen Längsschnitt einer Vorrichtung zur additiven Herstellung eines metallischen Bauteils;
Fig. 2 einen Längsschnitt einer weiteren Vorrichtung zur additiven Herstellung eines metallischen Bauteils.

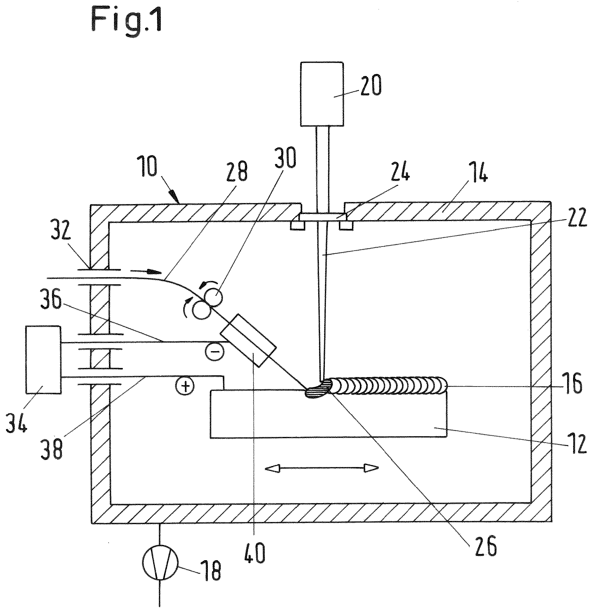

In Fig. 1 ist eine Vorrichtung 10 gezeigt, mit welcher ein Verfahren zur additiven Herstellung eines metallischen Bauteils 12 in einer Vakuumkammer 14 durchführbar ist. Das Bauteil 12, das in Fig. 1 noch als Werkstück in einem Zwischenstadium gezeigt ist, ist auf einem nicht näher gezeigten Tisch montiert, der ein Verfahren des Bauteils in der X-,Y-, und Z-Richtung ermöglicht. Das Bauteil 12 wird schichtweise im Sinne der additiven Herstellung erzeugt, d. h. bei dem in Fig. 1 gezeigten Ausführungsbeispiel sind bereits eine Reihe von Schichten aufgetragen worden, wobei die aufgetragene aktuelle Materialschicht 16 zur Veranschaulichung nicht maßstäblich überhöht dargestellt ist. Die erste Schicht kann auf einem zuvor in die Kammer 14 eingebrachten Substrat aufgebaut werden.

Eine Vakuumpumpe 18 evakuiert das Innere der Vakuumkammer 14 auf die im Bereich von thermischen Bearbeitungsverfahren im Vakuum üblichen Druckwerte.

Der zum Verschmelzen von zugeführtem metallischem Werkstoff in der aufgetragenen Materialschicht 16 erforderliche Energieeintrag wird durch einen Laser 20 bereitgestellt, der außerhalb der Vakuumkammer 14 angeordnet ist. Der Laserstrahl 22 wird durch ein Eintrittsfenster 24 in der Wandung der Vakuumkammer 14 zu einer Bearbeitungsstelle auf dem Bauteil 12 geleitet, an welcher sich durch die hohe Lichtleistung des Lasers 20 ein Schmelzbad 26 ausbildet. Eine nicht näher dargestellte Belüftung der Innenseite des Eintrittsfensters 24 verhindert, dass sich dort Metalldämpfe als Kondensat niederschlagen können.

Der metallische Werkstoff wird als Draht 28 mittels einer sehr vereinfacht dargestellten Drahtzuführung 30 der Bearbeitungsstelle an dem Schmelzbad 26 zugeführt. Der Draht 28 wird dabei durch eine Vakuumdurchführung 32 in der Wandung der Vakuumkammer 14 in das Innere der Vakuumkammer zugeführt und beispielsweise durch angetriebene Reibwalzen zugestellt.

Bei dem gezeigten Ausführungsbeispiel wird der Draht 28, der ggf. bereits außerhalb der Vakuumkammer 14 vorgewärmt werden kann, durch eine Widerstandsheizung weiter aufgeheizt, so dass er bereits vor dem Erreichen der Bearbeitungsstelle eine Temperatur im Bereich des Soliduspunktes des metallischen Werkstoffes erreicht. Bei dem in Fig. 1 gezeigten Ausführungsbeispiel ist zum Ausbilden einer Widerstandsheizung eine außerhalb der Vakuumkammer angeordnete Stromquelle 34 vorgesehen, die über elektrische Anschlussleitungen 36, 38, die durch die Wandung der Vakuumkammer 14 druckdicht geführt sind, einerseits mit dem Werkstück 12 und andererseits über einen elektrischen Kontaktor 40 mit dem Draht 28 verbunden. Für die Beheizung wird ein Gleichstrom eingesetzt, wobei die negative Polarität an dem elektrischen Kontaktor 40 und die positive Polarität an das Werkstück 12 angeschlossen ist. Die elektrischen Anschlüsse sind so bemessen, dass der Widerstand des zugeführten Drahtes 28 zwischen dem elektrischen Kontaktor 40 und dem Schmelzbad 26 auf der Werkstückoberfläche für ein Erwärmen des Drahtes auf die gewünschte Temperatur erfolgt.

Durch die zusätzliche Beheizung des Drahtes 28 vor dem Erreichen des Schmelzbades 26, kann die Lichtleistung des Lasers 20 erheblich kleiner eingestellt werden, als dies ohne eine elektrische Vorheizung des Drahtes 28 notwendig wäre. Dies hat den Vorteil, dass das Schmelzbad 26 weniger tief in das Werkstück hineinreicht, so dass zuvor aufgetragene Schichten auf dem Werkstück 12 durch das Aufbringen der weiteren Schicht weniger stark beeinträchtigt sind. Neben dem Vorteil einer präziseren Durchführung des Verfahrens kann auch der Laser 20 kleiner bemessen werden, was sich auf die Gesamtkosten der Vorrichtung 10 positiv auswirkt.

Während des Zuführens des Drahtes unter der Einwirkung der elektrischen Beheizung und dem Laserstrahl wird der Draht in dem Schmelzbad 26 aufgeschmolzen und als Materialschicht 16 auf das Werkstück 12 aufgetragen. Währenddessen wird das Bauteil 12 in einer Bearbeitungsrichtung verfahren, so dass sich ein zeilenweiser Aufbau ergibt. Grundsätzlich ist es auch möglich, gleichzeitig in mehreren Koordinatenrichtungen zu verfahren, in der Regel wird allerdings ein zeilenweiser Aufbau des Materials gewünscht sein. Sofern an einer bestimmten Stelle keine durchgängige Ausbildung der Materialschicht gewünscht ist, weil dort konstruktionsbedingt an dem fertigen Bauteil kein Material vorhanden sein soll, wird die Drahtzufuhr unterbrochen, der Laserstrahl abgeschaltet und/oder die Verfahrgeschwindigkeit des Bauteils 12 in diesen Bereichen kurzfristig stark erhöht.

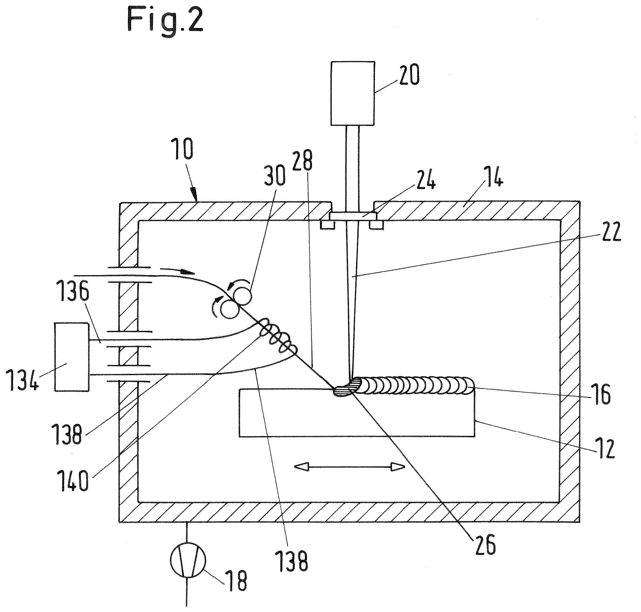

In Fig. 2 ist eine weitere Vorrichtung 10 gezeigt, die in den meisten konstruktiven Details der in Fig. 1 gezeigten Vorrichtung 10 entspricht und daher auch im wesentlichen mit gleichen Bezugszeichen versehen worden ist. Abweichend von der in Fig. 1 ausgebildeten Widerstandheizung zum Erwärmen des Drahtes 28 vor dem Erreichen des Schmelzbades 26, ist bei der in Fig. 2 gezeigten Ausführungsform eine Induktionsheizung vorgesehen, bei welcher eine außerhalb der Vakuumkammer angeordnete Stromquelle 134 über elektrische Zuleitungen 136, 138 über vakuumdichte Durchführungen mit einer Induktionsspule 140 verbunden ist, die den Draht zwischen der Drahtzuführung 30 und dem Schmelzbad 26 umgibt. Auf diese Weise ist durch das Erzeugen von Wirbelströmen in dem Draht ein induktives Vorheizen des Drahtes auf die bereits zuvor besprochenen Temperaturen ermöglicht

## Patentansprüche

1. Verfahren zur additiven Herstellung von dreidimensionalen, metallischen Bauteilen (12), wobei die Bauteile (12) schicht- oder abschnittsweise unter Vakuumbedingungen durch Verschmelzen eines metallischen Werkstoffes mit dem Bauteil (12) an einer Bearbeitungsstelle mittels einer Strahlenquelle mit hoher Energiedichte aufgebaut werden, wobei der metallische Werkstoff als Draht (28) zugeführt wird, wobei der Draht unter Vakuumbedingungen vor dem Erreichen der Bearbeitungsstelle vorgeheizt wird, **dadurch gekennzeichnet, dass** die Schmelzenergie durch einen Laserstrahl (2) aufgebracht wird, wobei der Draht unmittelbar elektrisch mittels Widerstandsheizung oder induktiv vorgeheizt wird.

2. Verfahren nach Anspruch 1, **dadurch gekennzeichnet, dass** der Strom zum Beheizen des Drahtes (28) über den Draht (28) und das Werkstück geleitet wird.

3. Verfahren nach Anspruch 2, **dadurch gekennzeichnet, dass** der Draht mit Gleichstrom erhitzt wird, wobei eine negative Polarität an dem Draht (28) und eine positive Polarität an dem Werkstück angelegt wird.

4. Verfahren nach einem der vorhergehenden Ansprüche, **dadurch gekennzeichnet, dass** der Draht (28) durch eine Vakuumdurchführung (32) in eine Vakuumkammer (14) zugeführt wird, in welcher das Bauteil (12) additiv hergestellt wird.

5. Verfahren nach Anspruch 4, **dadurch gekennzeichnet, dass** der Draht (28) vorgewärmt in die Vakuumkammer (14) zugeführt wird.

6. Verfahren nach einem der vorhergehenden Ansprüche, **dadurch gekennzeichnet, dass** der Laserstrahl (22) durch ein Fenster (24) in die Vakuumkammer (14) eingeleitet wird.

7. Verfahren nach Anspruch 6, **dadurch gekennzeichnet, dass** das Fenster mit einem Gas gespült wird.

8. Verfahren nach einem der vorhergehenden Ansprüche, **dadurch gekennzeichnet, dass** das Werkstück relativ zu der Bearbeitungsstelle, die stationär ausgebildet ist, bewegt wird.

9. Verfahren nach einem der vorhergehenden Ansprüche, **dadurch gekennzeichnet, dass** der Draht (28) auf eine Temperatur erhitzt wird, die zwischen einer Temperatur geringfügig unterhalb oder geringfügig oberhalb der Solidustemperatur des metallischen Werkstoffes liegt.

## Claims

1. Method for the additive manufacture of three-dimensional metallic components (12), wherein the components (12) are built layer-by-layer or section-by-section under vacuum conditions by fusing a metallic material with the component (12) at a processing location by means of a radiation source with a high energy density, wherein the metallic material is supplied as a wire (28), wherein the wire is preheated under vacuum conditions before reaching the processing location, **characterised in that** the melting energy is applied by a laser beam (2), wherein the wire is directly electrically preheated by means of resistance heating or inductively.

2. Method according to claim 1, **characterised in that** the current for heating the wire (28) is conducted via the wire (28) and the workpiece.

3. Method according to claim 2, **characterised in that** the wire is heated using direct current, wherein a negative polarity is applied to the wire (28) and a positive polarity is applied to the workpiece.

4. Method according to any of the preceding claims, **characterised in that** the wire (28) is supplied through a vacuum feedthrough (32) into a vacuum chamber (14) in which the component (12) is additively manufactured.

5. Method according to claim 4, **characterised in that** the wire (28) is supplied into the vacuum chamber (14) in a preheated state.

6. Method according to any of the preceding claims, **characterised in that** the laser beam (22) is introduced through a window (24) into the vacuum chamber (14).

7. Method according to claim 6, **characterised in that** the window is purged with a gas.

8. Method according to any of the preceding claims, **characterised in that** the workpiece is moved relative to the machining point, which is configured to be stationary.

9. Method according to any of the preceding claims, **characterised in that** the wire (28) is heated to a temperature which is between a temperature slightly below and a temperature slightly above the solidus temperature of the metallic material.

## Revendications

1. Procédé de fabrication additive de composants métalliques tridimensionnels (12), dans lequel les composants (12) sont réalisés sous forme de couches ou de segments, sous vide, par fusion d'une matière métallique avec le composant (12) en un point d'usinage au moyen d'une source de rayonnement présentant une densité d'énergie élevée, dans lequel le matériau métallique est acheminé sous la forme d'un fil (28), dans lequel le fil est préchauffé dans des conditions de vide avant d'atteindre le point d'usinage, **caractérisé en ce que** l'énergie de fusion est appliquée par un faisceau laser (2), dans lequel le fil est directement préchauffé électriquement au moyen d'un chauffage par résistance ou par induction.

2. Procédé selon la revendication 1, **caractérisé en ce que** le courant pour chauffer le fil (28) passe par le fil (28) et la pièce à usiner.

3. Procédé selon la revendication 2, **caractérisé en ce que** le fil est chauffé avec un courant continu, dans lequel une polarité négative est appliquée au fil (28) et une polarité positive est appliquée à la pièce à usiner.

4. Procédé selon l'une quelconque des revendications précédentes, **caractérisé en ce que** le fil (28) est acheminé à travers un passage sous vide (32) dans une chambre sous vide (14) dans laquelle le composant (12) est fabriqué de manière additive.

5. Procédé selon la revendication 4, **caractérisé en ce que** le fil (28) est acheminé dans la chambre sous vide (14) préchauffé.

6. Procédé selon l'une quelconque des revendications précédentes, **caractérisé en ce que** le faisceau laser (22) est introduit dans la chambre sous vide (14) à travers une fenêtre (24).

7. Procédé selon la revendication 6, **caractérisé en ce que** la fenêtre est rincée avec un gaz.

8. Procédé selon l'une quelconque des revendications précédentes, **caractérisé en ce que** la pièce à usiner est déplacée par rapport au point d'usinage, qui est conçu pour être fixe.

9. Procédé selon l'une quelconque des revendications précédentes, **caractérisé en ce que** le fil (28) est porté à une température qui est comprise entre une température légèrement inférieure ou légèrement supérieure à la température de solidus du matériau métallique.
